(19) Europäisches Patentamt European Patent Office Office européen des brevets

(11) **EP 4 733 833 A1**

(12) **EUROPEAN PATENT APPLICATION**

(43) Date of publication:
**29.04.2026 Bulletin 2026/18**

(21) Application number: **24208967.0**

(22) Date of filing: **25.10.2024**

(51) International Patent Classification (IPC):
**G02F 1/01** (2006.01)     **G02F 1/29** (2006.01)
**G02B 27/00** (2006.01)     **G01S 7/481** (2006.01)

(52) Cooperative Patent Classification (CPC):
**G02F 1/0147; G01S 7/4817; G02B 27/0087; G02F 1/292**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nederlandse Organisatie voor toegepast-natuurwetenschappelijk onderzoek TNO
2595 DA 's-Gravenhage (NL)**

(72) Inventors:
• **ABDOU, Aly Refaey Aly
2595 DA 's-Gravenhage (NL)**
• **GELINCK, Gerwin Hermanus
2595 DA 's-Gravenhage (NL)**
• **DE LOUW, Nick
2595 DA 's-Gravenhage (NL)**

(74) Representative: **V.O.
P.O. Box 87930
2508 DH Den Haag (NL)**

(54) **OPTICAL PHASE TUNING DEVICE AND METHOD**

(57)     An optical phase tuning device (1) is provided that comprises a beam splitter (3), a tunable gradient phase shifter (4) and a controller (6) for providing a single drive signal (Iheat) for resistively heating the resistive heating elements. The beam splitter (3) is configured to split a coherent optical beam into a series of individual coherent beams. The tunable gradient phase shifter (4) has a corresponding series of thermo-optical phase shifters (4b, 4c, 4d, 4e), each of which is configured to apply a respective phase shift to a respective one of the individual coherent beams. The thermo-optic phase shifters each comprise a respective resistive heating element (5b, 5c, 5d, 5e) having a mutually different width. The controller (6) provides a single drive signal (Iheat) for resistively heating the resistive heating elements. Therewith a respective phase shift is imposed to each of the individual coherent beams that is substantially inversely proportional to the squared width of the respective resistive heating elements.

FIG. 1

EP 4 733 833 A1

**Description**

BACKGROUND

Field of the invention

The present invention pertains to an optical phase tuning device.
The present invention pertains to an optical phase tuning method.

Background of the invention

Phased arrays (PAs) are used to steer electromagnetic waves by controlling the phase of emitted coherent light from multiple antennas. In many applications, including LiDAR, a large number of phase tuners are needed, which increases the chip size and complexity of the control circuit to prohibitive limits. So, solutions to decrease the complexity of the control circuit have been proposed, however, improvements are still needed. One approach is disclosed in US10261388B2. A device is disclosed therein that includes a waveguide grating out-coupler and a tunable uniform phase shifter communicating with the waveguide grating out-coupler. The tunable uniform phase shifter steers a flat phase front along a first angle in a first plane. The cited document discloses a standard silicon photonic optical phased array approach uses sequential 1×2 splitters to achieve 16 waveguide channels. A standard triangular-shaped thin film heater above the waveguide provides a linear phase gradient so that a single control signal varies the phase shift via thermo-optic heating and hence steers the beam along the θ-angle.
It is a disadvantage of the known approach that therewith the arrangement of thermo-optic phase shifters is restricted to a single configuration.

SUMMARY

It is a first object of the present invention to provide an improved optical phase tuning device that mitigates the above-mentioned restriction
It is a second object of the present invention to provide an improved optical phase tuning method that mitigates the above-mentioned restriction
The improved optical phase tuning device provided in accordance with the first object comprises a beam splitter, a tunable gradient phase shifter and a controller.
In the improved optical phase tuning device the beam splitter splits the coherent optical beam into a series of individual coherent beams. The tunable gradient phase shifter comprises a corresponding series of thermo-optical phase shifters. Each is configured to apply a phase shift to a respective one of the individual coherent beams. The thermo-optic phase shifters each comprise a respective resistive heating element and a waveguide of a thermo-optic material in thermal contact with the resistive heating element. The resistive heating elements having a respective width and are mutually electrically connected. The waveguide that is in thermal contact with the resistive heating element may be of a material different from what is applied for other parts in the optical device, but that is not necessary. The thermo-optic phase shifter can be defined as a section of a longer waveguide that is in thermal contact with the resistive heating element. Although in that case the complete waveguide needs to have a temperature sensitive optical characteristic, the actual control of the phase of the optical beam is provided by the section that is heated by the resistive heating element. Indeed various materials that are typically applied in waveguides do have a temperature dependent phase shift.
The controller provides a single drive signal with which the mutually connected resistive heating elements are resistively heated. Due to the fact that the resistive heating elements have a mutually different width, it is achieved that they are heated to a mutually different temperature with the single drive signal. The resistive heating elements can be mutually connected by interconnections with a relatively low resistance as compared to the resistance of the resistive heating elements, so that resistive heat loss in the interconnections is substantially less than that in the resistive heating elements, for example five times less, ten times less or even a hundred times less. This may be achieved by a proper selection of the materials of the interconnections and the resistive heating elements or of their dimensions. For example by using a material for the interconnections having a specific resistance that is substantially less than that of the material of the resistive heating elements and/or providing the interconnections with a sufficiently large cross-section to length ratio as compared to that of the resistive heating elements. In comparison to the arrangement of a large triangular heater element configuration as disclosed in the prior art discussed above, a substantial reduction in power consumption can be achieved in that the relatively high resistance heater elements only need to be present in an area above the waveguide where the phase shift is required while in the remainder of the chip area low resistance interconnects can be used to electrically connect the resistive heating elements.
Due to the fact that the resistive heating elements are mutually connected by interconnections with a relatively low resistance the thermo-optical phase shifters can be configured freely. As noted the respective resistive heating elements may have a width that is an increasing function of their rank, e.g. arranged in a sequence along an arrangement direction in accordance with their rank. This is particularly favorable if the output of the phase shifter is to be provided to antenna. In other embodiments the thermo-optical phase shifters and their respective resistive heating elements may have a different geometrical arrangement.

In an embodiment of the optical phase tuning device the resistive heating elements have a length in a direction coinciding with a longitudinal direction of the thermo-optical phase shifters, have a respective electric contact at mutually opposite ends in said direction and are electrically connected in series to the controller. Therewith a temperature increase can be induced in each of the thermo-optic phase shifters that is at least substantially proportional to the inverse square of the width of the resistive heating elements. Therewith also a phase shift is achieved in the thermo-optic phase shifters that is at least substantially proportional to the inverse square of said width.

The same relationship can be achieved in an embodiment of the optical phase tuning device wherein the resistive heating elements have a width in a direction transverse to a longitudinal direction of the thermo-optical phase shifters, have a respective electric contact at mutually opposite sides in said width direction and are electrically connected in parallel to the controller.

For efficiency of manufacturing processes it is favorable if the resistive heating elements and their electric interconnections mutually have a same height.

In an embodiment the width of the resistive heating elements is less than that of their associated thermo-optic phase shifter. Therewith power consumption is minimized. Alternatively, in a case wherein a resistive heating element has a relatively large width, the at least one thermo-optic phase shifter may be routed multiple times against the surface of its respective resistive heating element to minimize power consumption.

The present disclosure further provides a phased array that comprises an optical phase tuning device wherein the respective resistive heating elements have a width that is an increasing function of their rank as described above and that further comprises a coherent optical source for providing the coherent optical beam signal and an array of antennas each of which is coupled to a respective thermo-optic phase shifter. This arrangement is configured to output a linear wavefront in a plane having an angle relative to a reference plane defined by the array of antennas, wherein the angle is controlled by a magnitude of a power provided by the controller.

Such a phased array may for example be applied in a LiDAR.

An optical phase tuning method as disclosed herein comprises following steps.

splitting a coherent optical beam into a series of individual coherent beams;
guiding respective ones of the individual coherent beams via respective thermo-optic phase shifters;
heating the respective thermo-optic phase shifters with respective electrically interconnected resistive heating elements, respective resistive heating elements having a mutually different width in a direction transverse to a longitudinal direction of their respective thermo-optic phase shifters;
providing a single drive signal for resistively heating the electrically connected resistive heating elements;
therewith applying a respective phase shift to each of the individual coherent beams which is substantially inversely proportional to the squared width of the respective resistive heating elements.

BRIEF DESCRIPTION OF THE DRAWINGS

These and other aspects are described in more detail with reference to the drawings. Therein:

FIG. 1 schematically shows an embodiment of an improved optical device;
FIG. 1A shows in more detail an example of a thermo-optic phase shifter and its associated resistive heating element;
FIG. 1B shows in more detail another example of a thermo-optic phase shifter and its associated resistive heating element;

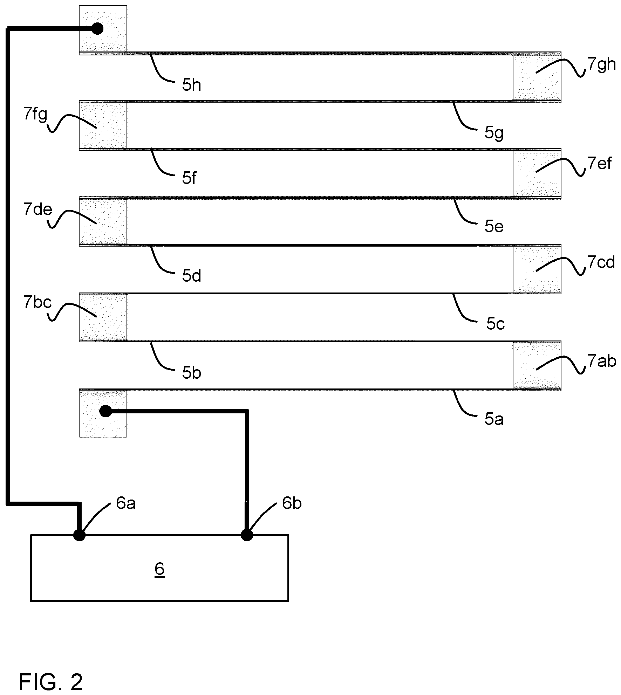

FIG. 2 shows aspects of a simulation;
FIG. 3 shows a further example of a thermo-optic phase shifter and its associated resistive heating element;
FIG. 4A, 4B show two spatial configurations of a thermo-optic phase shifters and their associated resistive heating elements.

DETAILED DESCRIPTION OF EMBODIMENTS

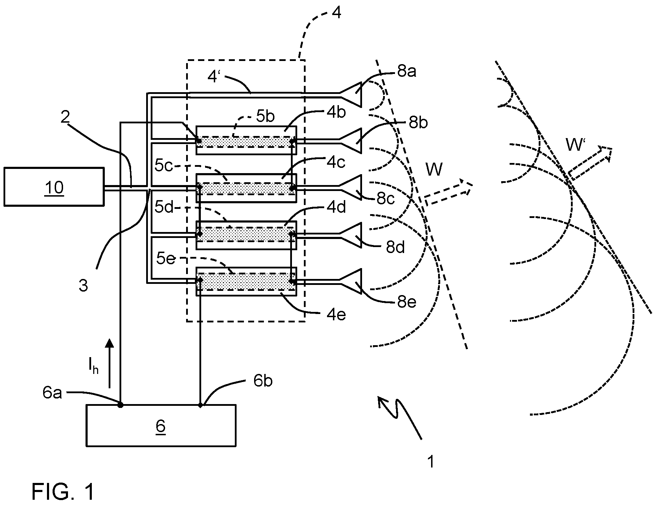

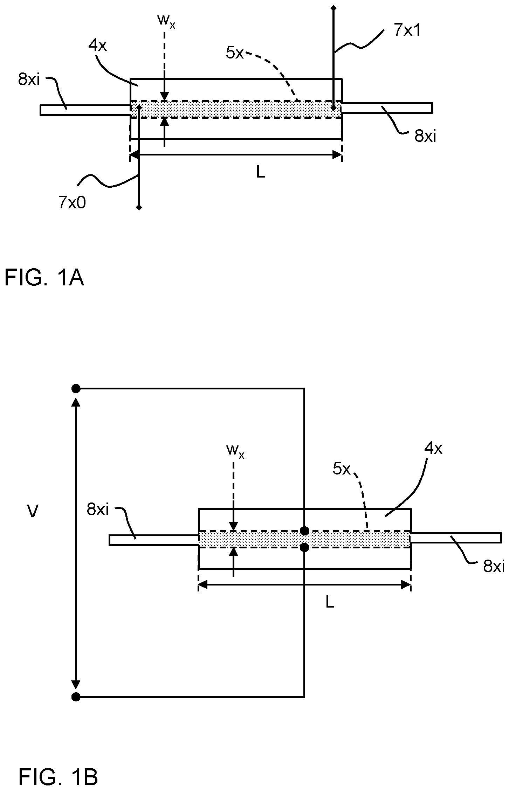

FIG. 1 schematically shows an embodiment of an improved optical device 1. As shown therein, the device 1 comprises a waveguide 2, a beam splitter 3, and a tunable gradient phase shifter 4 and a controller 6.

The waveguide 2 is configured for receiving a coherent optical beam, in the example shown, provided by a laser 10. The beam splitter 3 is configured to split the coherent optical beam into a series of individual coherent beams. The tunable gradient phase shifter 4 has a corresponding series of thermo-optical phase shifters 4b, 4c, 4d, 4e. Each thereof is configured to apply a phase shift to a respective one of the individual coherent beams provided by the beam splitter 3. In this example, the tunable gradient phase shifter 4 is a tunable linear gradient phase shifter and the phase shift applied by each of the thermo-optical phase shifters 4b, 4c, 4d, 4e is proportional to its rank in the series of phase shifters. In this example the tunable gradient phase shifter 4 has a first branch 4' that guides its respective individual coherent beam without a phase shift. The phase shifters 4b, 4c, 4d, 4e in the other branches apply a phase shift with a magnitude that is a multiple, i.e. respectively 1x, 2x, 3x and 4x times a unit phase shift $\phi_t$. This is achieved in that the thermo-optic phase shifters 4b, 4c, 4d, 4e each comprise a respective resistive heating element 5b, 5c, 5d, 5e having a width that is an increasing function of their rank. The resistive heating elements are electrically connected in series. The controller 6 is configured to provide a single drive signal $I_h$ for resistively heating the serially connected resistive heating elements. By way of example shown the resistive heating elements are provided of TiN and their interconnection as well as the electrical connections with the controller are provided of Au. Exemplary alternative materials are Ti, W, TiW or Cr/Au, Pt, TiN, Ni, but also doped poly silicon, graphene, indium tin oxide (ITO) for the resistive heating elements. However many other materials are suitable for this purpose depending on the circumstances. Exemplary alternative materials for the interconnections are Al, Cu, Ag,.

As in the example of FIG. 1, the resistive heating elements 5b, ...,5e are interconnected by electrically well conducting interconnections, a loss of electric power is mitigated.

In the example shown, the tunable gradient phase shifter forms a phased array that further comprises an array of antennas 8a, 8b,...,8e. Each antenna is coupled to a respective thermo-optic phase shifter 4', 4b, ...,4e, wherein 4' is a zero-phase shifter, i.e. passes the optical signal without a phase shift. As noted, the phase shifters 4b, 4c, 4d, 4e in the other branches apply a phase shift with a magnitude that is a multiple, i.e. respectively 1x, 2x, 3x and 4x times a unit phase shift $\phi_t$. Therewith the array of antennas 8a, 8b,...,8e emits a linear wavefront W having an angle deviating from a reference plane in which the array of antennas 8a, 8b,...,8e is arranged. When applying a higher power to the resistive elements or applying the power during a longer time interval, a wavefront W' deviating with a larger angle from the reference plane may be emitted. Also a wavefront parallel to the reference plane may be emitted by not supplying power to the serially arranged resistive heating elements.

An exemplary thermo-optic phase shifter 4x and its associated resistive heating element 5x is shown in more detail in FIG. 1A. As noted above, the thermo-optic phase shifter can be provided as a section of a longer waveguide that is arranged in thermal contact with the resistive heating element 5x. That is, it is an option to interrupt the waveguide with a section constituted of a different material, but this is not necessary, as various materials known for use in an optical waveguide show a temperature dependent phase shift. Hence, a thermo-optic phase shifter can be provided by arranging a resistive heating element in thermal contact with a section of an optical waveguide. Some exemplary materials showing a temperature dependent phase shift are mentioned in the following table:

| Exemplary thermo-optic materials |
| --- |
| Silicon (Si) |
| Silicon Dioxide ($SiO_2$) |
| Silicon Nitride ($Si_3N_4$): |
| Vanadium Dioxide ($VO_2$) |
| Germanium (Ge) |
| Liquid Crystals |
| Chalcogenide Glasses ($As_2S_3$, $As_2Se_3$) |
| Lithium Niobate ($LiNbO_3$) |
| Polymers (e.g. PMMA, Polyimides) |
| Gallium Arsenide (GaAs) |
| Indium Phosphide (InP) |

As noted, this type of materials, of which only a subset is included in the table, may be specifically provided as a dedicated optical element that in conjunction with the resistive heating element forms the thermo-optic phase shifter, but alternatively, a complete waveguide may be formed of such a thermo-optic material and the resistive heating element in thermal contact with a section of that waveguide causes that section to function as a thermo-optic phase shifter.

As shown therein the thermo-optic phase shifters 4x and its resistive heating element 5x have a length L and the resistive heating element 5x has a width $w_x$. It is further presumed that the resistive heating element 5x has a thickness h.

For facilitating an efficient manufacturing it is advantageous that the resistive heating elements mutually have the same thickness, e.g. fixed by the foundry.

As a result of a supplied drive signal, i.e. the supply current $I_h$, an electric power P is dissipated in the resistive heating element (5x) that is equal to:

$$P = I_h^2 R_x \tag{1}$$

Therein the resistance $R_x$ is equal to:

$$R_x = \frac{\rho \cdot L}{h \cdot w_x} \tag{2}$$

Wherein $\rho$ is the specific electrical resistance of the material of the resistive heating element.

Therewith the energy supplied to the resistive heating element in a time interval t is:

$$E = \frac{I_h^2 \cdot \rho \cdot L \cdot t}{h \cdot w_x} \tag{3}$$

The increase in temperature $\Delta T$ is equal to the ratio of the supplied energy E and the heat capacity of the resistive heating element.

The heat capacity $C_h$ is:

$$C_h = h \cdot w_x \cdot L \cdot c \cdot d \tag{4}$$

Therein c is the specific heat of the material of the resistive heating element and d is the density of the material of the resistive heating element. Accordingly:

$$\Delta T = \frac{I_h^2 \cdot \rho \cdot L \cdot t}{h^2 \cdot w_x^2 \cdot L \cdot c \cdot d} = \frac{I_h^2 \cdot \rho \cdot t}{h^2 \cdot w_x^2 \cdot c \cdot d} \tag{5}$$

Given a required temperature increase $\Delta T$ for a resistive heating element 5x to be achieved with a current I during a time interval t, its width $w_x$ can be computed as:

$$w_x = \frac{I}{h} \sqrt{\frac{\rho \cdot t \cdot \Delta T}{c \cdot d}} \tag{6}$$

Therewith it is presumed that the heat capacity of the wave guide 4x is negligible relative to that of the resistive heating element 5x.

Accordingly, the configuration as shown in FIG. 1 and 1A, wherein the resistive heating elements 5b, 5c, 5d, 5e are electrically connected in series with contacts at their longitudinal ends has the advantage that the temperature increase is independent of the length of the resistive element and inversely proportional to the square of its width. Therewith the multiplication factor for the phase shift to be applied in each of the thermo-optic phase shifters 4b, 4c, 4d, 4e can be configured by the width of the resistive heating elements and the unit phase shift $\phi_t$ can be controlled by the magnitude of the power delivered by the controller 6.

Alternatively, the resistive heating elements 5x may be connected in parallel with an electrical connection to the controller 6 to each of their lateral sides as shown in FIG. 1B. Also in this case it is achieved that the temperature increase $\Delta T$ is independent of the length L and inversely proportional to the squared width $w_x$ of the resistive heating element 5x. Therewith the multiplication factor for the phase shift to be applied in each of the thermo-optic phase shifters 4b, 4c, 4d, 4e can be configured by the width of the resistive heating elements and the unit phase shift $\phi_t$ can be controlled by the magnitude of the power delivered by the controller 6.

$$R_x = \frac{\rho \cdot w_x}{h \cdot L} \tag{7}$$

$$P = \frac{V_h^2}{R_x} = \frac{V_h^2 \cdot h \cdot L}{\rho \cdot w_x} \tag{8}$$

$$\Delta T = \frac{V_h^2 \cdot h \cdot L \cdot t}{\rho \cdot h \cdot w_x^2 \cdot L \cdot c \cdot d} = \frac{V_h^2 \cdot t}{\rho \cdot w_x^2 \cdot c \cdot d} \tag{10}$$

Also other configurations are possible, for example wherein the resistive heating elements are electrically connected in parallel at their longitudinal ends or electrically connected in series at their lateral sides. However in these configurations the temperature increase is dependent on the length of the resistive heating elements and independent on their width.

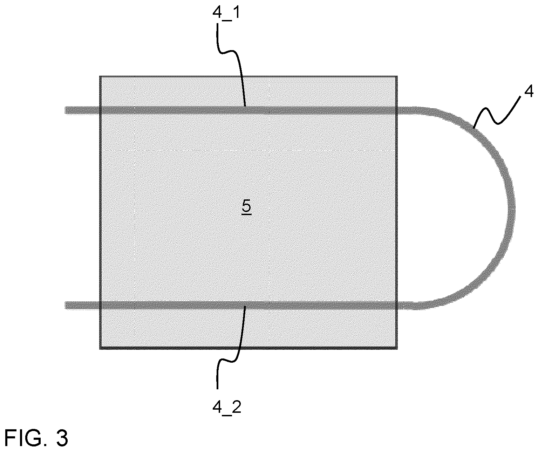

FIG. 3 schematically shows a simulation of an arrangement of eight resistive heating elements 5a, 5b,...,5h that are electrically connected in series by electrical connections 7ab, 7bc,..., 7gh. The serially connected arrangement is connected to terminals 6a, 6b of the controller 6. Simulation results are presented in the following table. Therein, for each of the simulated resistive heating elements (RHE) 7a, 7b, ... 7h, the second and the third column show the width w (in arbitrary units) and the corresponding squared width $w^2$. The fourth column shows the increase in temperature resulting from a supply of electrical energy during 1 $\mu$s. The fifth column shows the expected increase in temperature relative to the increase in temperature of the first one of the resistive heating elements 7a. The sixth column shows the actually observed ratio computed from the data ($\Delta T(n)$) in the fourth column. The seventh column shows the expected ratio in phase shift occurring in a thermo-optic phase shifters heated by the nth resistive heating element relative to the phase shift occurring in a thermo-optic phase shifters heated by the first resistive heating element 7a.

| RHE | w | $w^2$ | $\Delta T(n)$ | $\Delta T(n)/\Delta T(a)$ (theoretical) | $\Delta T(n)/\Delta T(a)$ (experimental) | $\Delta\phi(n)/\Delta\phi(a)$ |
|---|---|---|---|---|---|---|
| **7a** | 5.66 | 32.04 | 4.56 | 1 | 1 | 1 |
| **7b** | 4 | 16 | 8.79 | 2 | 1.93 | 1.93 |
| **7c** | 3.27 | 10.69 | 14.39 | 3 | 3.16 | 3.16 |
| **7d** | 2.83 | 8.01 | 19.03 | 4 | 4.17 | 4.17 |
| **7e** | 2.53 | 6.4 | 23.65 | 5 | 5.19 | 5.19 |
| **7f** | 2.31 | 5.34 | 28.77 | 6 | 6.31 | 6.31 |
| **7g** | 2.14 | 4.58 | 33.39 | 7 | 7.32 | 7.32 |
| **7h** | 2 | 4 | 38.74 | 8 | 8.5 | 8.5 |

It can be seen that therewith a phase shift can be obtained that is a substantially linear function of the rank of the resistive heating element. It can be seen that for the elements 7c - 7h the increase in temperature is slightly higher than what would be expected. The increase in temperature of the element 7b is however slightly lower than the expected value. This is explained by the effect of a heat transport from the resistive heating element to its electrical interconnections which radiate/conduct heat to the environment. As the resistive heating element 7b is relatively wide this effect is relatively strong, but for the higher ranked resistive heating elements this effect diminishes, so that only for the heating element 7b the temperature is somewhat lower than expected and for the other heating elements the temperature slightly exceeds the expected value, with a factor of about 1.05.

A more accurate linear relationship can be achieved by taking into account for the contact resistance between the heaters and the metal track that interconnects them.

Also, thermal aspects, like heat convection to the surrounding for example, can be taken into account by an additional factor ($k \cdot h$) in the denominator to read:

$$\Delta T = \frac{l_h^2 \cdot \rho \cdot t}{h^2 \cdot w_x^2 \cdot c \cdot d + k \cdot h} \tag{11}$$

Therein k is a heat conduction coefficient.

Therewith the required width $w_x$ of a resistive heating element x can be computed as:

$$W_x = \frac{1}{h}\sqrt{\frac{(I^2 \cdot \rho \cdot t - k \cdot h)\Delta T}{c \cdot d}} \qquad\qquad (12)$$

As indicated above, more refined models can be developed that predict the relationship between the temperature increase and the dimensions of the heating elements. It is noted that any deviations from the theoretical ratio as predicted by equation (5), (10) or (11) or deviations from a more refined model can be easily determined by routine experiments in a design stage and taken into account by a slight adaptation of the heating element width to achieve the desired temperature ratio.

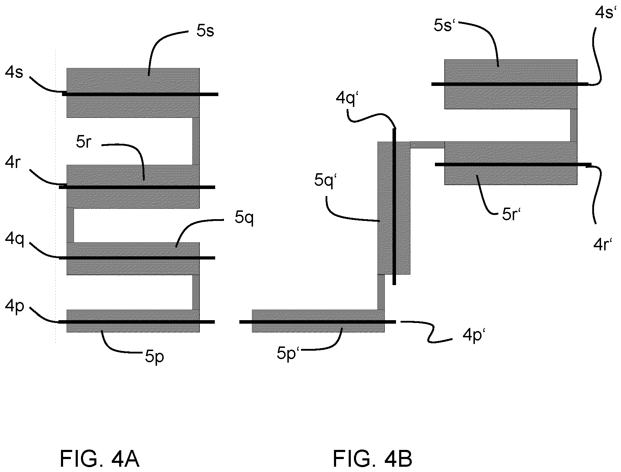

In some examples the width of the resistive heating element 5 may exceed a width of the thermo-optic phase shifter. In that case a more efficient use of the resistive heating element is achieved by routing the thermo-optic phase shifter 4 multiple times over the surface of the resistive heating element 5. One example thereof is shown in FIG. 4, wherein the thermo-optic phase shifter 4 has a first and a second thermo-optic phase shifter section 4_1, 4_2 on the same resistive heating element 5. Further examples are provided in the following table. Therein the column N indicates the number of times that the thermo-optic phase shifter (TOPS) is routed along the surface of the resistive heating element 5. By way of example thermo-optic phase shifters a, b, c are respectively routed 1, 2 and 3 times over a resistive heating element having a width of 10 (arbitrary units). The temperature increase $\Delta T$ is equal for each of the thermo-optic phase shifters a, b, c, but the total length of the thermo-optic phase shifters b, c that thermally contacts the resistive heating element respectively is two times and three times that of the thermo-optic phase shifter a. Thermo-optic phase shifters d and e each are routed once along the surface of a respective resistive heating element. Thermo-optic phase shifters f and g each are routed three times along the surface of a respective resistive heating element. Thermo-optic phase shifter h is routed two times along the surface of a resistive heating element as shown in FIG. 4 for example.

| TOPS | w | w$^2$ | $\Delta T(n)/\Delta T(a)$ | N | $\Delta\phi(n)/ \Delta\phi(a)$ |
|---|---|---|---|---|---|
| **a** | 10 | 100 | 1 | 1 | 1 |
| **b** | 10 | 100 | 1 | 2 | 2 |
| **c** | 10 | 100 | 1 | 3 | 3 |
| **d** | 5 | 25 | 4 | 1 | 4 |
| **e** | 4.74 | 19.98 | 5 | 1 | 5 |
| **f** | 7.07 | 49.98 | 2 | 3 | 6 |
| **g** | 6.55 | 42,90 | 2.33 | 3 | 6.99 |
| **h** | 5 | 25.00 | 4 | 2 | 8 |

FIG. 4A schematically shows tunable gradient phase shifter 4 with a corresponding series of thermo-optical phase shifters 4p, 4q, 4r, 4s, each configured to apply a phase shift to a respective one of the individual coherent beams. The thermo-optic phase shifters 4p, 4q, 4r, 4s each comprise a respective resistive heating element 5p, 5q, 5r, 5s. The resistive heating elements 5p, 5q, 5r, 5s have a length in a direction coinciding with a longitudinal direction of the thermo-optical phase shifters 4p, 4q, 4r, 4s, and are electrically connected in series to each other at respective electric contact at mutually opposite ends in their direction so that they can be controlled by a single power supply signal from a controller. As noted above, therewith a temperature increase can be induced in each of the thermo-optic phase shifters 4p, 4q, 4r, 4s that is at least substantially proportional to the inverse square of the width of the resistive heating elements 5p, 5q, 5r, 5s. Therewith also a phase shift is achieved in the thermo-optic phase shifters 4p, 4q, 4r, 4s that is at least substantially proportional to the inverse square of said width. In an alternative arrangement the same relationship between the phase shift in the thermo-optic phase shifters and the width of the resistive heating elements is achieved when the resistive heating elements are mutually connected electrically in parallel at electric contacts at mutually opposite sides in their width direction.

The thermo-optical phase shifters 4p', 4q', 4r', 4s', and their associated resistive heating elements 5p', 5q', 5r', 5s'. may be arbitrarily arranged, as shown in FIG. 4B.

Steps of an optical phase tuning method as disclosed herein are specified below.

A coherent optical beam for example from a laser 10 is split into a series of individual coherent beams. Respective ones of the individual coherent beams are guided via respective thermo-optic phase shifters 4b,...,4e. As shown in FIG. 1 also an individual coherent beam may be guided without imposing a phase shift, e.g. by a simple waveguide 4' as shown in FIG. 1. The respective thermo-optic phase shifters 4b,...,4e are heated with respective electrically interconnected resistive heating elements 5b,...,5e that have a mutually different width in a direction transverse to a longitudinal direction of their respective thermo-optic phase shifters. The electrically interconnected resistive heating elements are resistively heated with a single drive signal. The resulting increase in temperature is substantially inversely proportional to the squared width of the respective resistive heating elements. Therewith also a respective phase shift is imposed to each of the individual coherent beams that is substantially inversely proportional to the squared width of the respective resistive heating elements.

## Claims

1. An optical phase tuning device (1) comprising:

   a beam splitter (3) to split a coherent optical beam into a series of individual coherent beams;
   a tunable gradient phase shifter (4) with a corresponding series of thermo-optical phase shifters (4b, 4c, 4d, 4e), each configured to apply a respective phase shift to a respective one of the individual coherent beams;
   wherein the thermo-optic phase shifters each comprise a respective resistive heating element (5b, 5c, 5d, 5e) having a mutually different width;
   a controller (6) for providing a single drive signal (Iheat) for resistively heating the resistive heating elements.

2. The optical phase tuning device according to claim 1, wherein the resistive heating elements have a length in a direction coinciding with a longitudinal direction of the thermo-optical phase shifters, have a respective electric contact at mutually opposite ends in said direction and are electrically connected in series to the controller.

3. The optical phase tuning device according to claim 1, wherein the resistive heating elements have a width in a direction transverse to a longitudinal direction of the thermo-optical phase shifters, have a respective electric contact at mutually opposite sides in said width direction and are electrically connected in parallel to the controller.

4. The optical phase tuning device according to claim 1, 2 or 3, wherein the thermo-optic phase shifters each comprise a respective resistive heating element (5b, 5c, 5d, 5e) having a width that is an increasing function of their rank.

5. The optical phase tuning device according to one of the preceding claims, wherein the resistive heating elements (5b, ...,5e) and their electric interconnections mutually have a same height.

6. The optical phase tuning device according to one of the preceding claims, wherein a total resistive loss in electrical connections of the resistive heating elements (5b, ...,5e) is substantially less than that in the resistive heating elements (5b, ...,5e) proper.

7. The optical phase tuning device according to claim 6, wherein the resistive heater elements only are present in an area above the waveguide, the resistive heater elements being interconnected by electrical interconnections with a relatively low electrical resistance.

8. The optical phase tuning device according to one of the claims 1-5, comprising at least one thermo-optic phase shifter having a thermo-optic phase shifter (4) that is routed multiple times along the surface of its respective resistive heating element (5).

9. A phased array comprising the optical phase tuning device of claim 4 and further comprising a coherent optical source (10) for providing the coherent optical beam signal and comprising an array of antennas (8a, 8b,...,8e) each antenna coupled to a respective thermo-optic phase shifter.

10. A LiDAR comprising a phased array as claimed in claim 9.

11. An optical phase tuning method comprising:

   splitting a coherent optical beam into a series of individual coherent beams;
   guiding respective ones of the individual coherent beams via respective thermo-optic phase shifters;
   heating the respective thermo-optic phase shifters with respective electrically interconnected resistive heating elements, respective resistive heating elements having a mutually different width in a direction transverse to a longitudinal direction of their respective thermo-optic phase shifters;
   providing a single drive signal for resistively heating the serially connected resistive heating elements;

therewith applying a respective phase shift to each of the individual coherent beams which is substantially inversely proportional to the squared width of the respective resistive heating elements.

FIG. 1

FIG. 1A

FIG. 1B

FIG. 2

FIG. 3

EP 4 733 833 A1

FIG. 4A          FIG. 4B

14

## EUROPEAN SEARCH REPORT

**Application Number**

EP 24 20 8967

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2017 187649 A (TOYOTA CENTRAL RES & DEV) 12 October 2017 (2017-10-12) * the whole document * ----- | 1-3,9-11 | INV. G02F1/01 G02F1/29 G02B27/00 |
| X | WO 2014/031081 A1 (AGENCY SCIENCE TECH & RES [SG]) 27 February 2014 (2014-02-27) * figures 1-3 * * paragraphs [0003] - [0005], [0032] - [0036], [0080] - [0082] * ----- | 1-8,11 | ADD. G01S7/481 |

**TECHNICAL FIELDS SEARCHED (IPC)**

G02F
G01S
G02B

The present search report has been drawn up for all claims

| Place of search | Date of completion of the search | Examiner |
|---|---|---|
| The Hague | 26 February 2025 | Topak, Eray |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 8967

This annex lists the patent family members relating to the patent documents cited in  the above-mentioned European search report.
The members are as contained in the European Patent Office EDP file on
The European Patent Office is in no way liable for these particulars which are merely given for the purpose of information.

26-02-2025

| Patent document cited in search report | Publication date | Patent family member(s) | Publication date |
|---|---|---|---|
| JP 2017187649 A | 12-10-2017 | NONE | |
| WO 2014031081 A1 | 27-02-2014 | NONE | |

EPO FORM P0459

For more details about this annex : see Official Journal of the European Patent Office, No. 12/82

**REFERENCES CITED IN THE DESCRIPTION**

**Patent documents cited in the description**

- US 10261388 B2